# EUROPEAN PATENT APPLICATION

(11) **EP 1 583 301 A1**
(43) Date of publication of application: **05.10.2005**
(21) Application number: 04007718.2
(22) Date of filing: 30.03.2004
(51) Int. Cl.: H04L 12/58, H04M 3/533, G06F 17/60

(54) **Voice messaging system with email reply**

(71) Applicant: Web. De AG, 76227 Karlsruhe (DE)
(72) Inventor: Greve, Michael, 76227 Karlsruhe (DE)
(74) Representative: DTS München

(57) **Abstract**

The present invention provides a method for enabling a direct reply to a sender's message which is forwarded form by a messaging system to the recipient. In particular the system (20) which receives from the sender a voice message (104) composes an Email (200) to be sent to the recipient by performing the steps of: using identification data, such as telephone number (101), of the sender; accessing a database (202) and matching the identification data (101) to an address, such as an Email address (203) of the message sender, retrieving said address (203) and forwarding the message (104) in said form (200) to the recipient to enable him or her to send back a reply message, in particular in form of a reply Email, to the sender by using said retrieved address (203).

Thus the recipient can make use of this retrieved address (203) to instantly send back a reply message to the sender. The invention provides a comfort messaging wherein the identification data of the sender, which may be e.g. the telephone number of a voice message sender, is mapped to an appropriate address of the sender, which may be e.g. his or her Email address. The invention also covers many other applications such as the receipt of fax and the comfort reply by SMS or MMS. The reply address may be retrieved from any database, in particular from a contact database of a website-based communications environment may be used.

## Description

### Field of the invention

In general, the present invention relates to a method and a messaging system for enabling a direct reply to a sender's message. In particular, the invention relates to an voice messaging system, which allows the recipient of a voice message to easily reply by Email.

### Background of the invention

Messaging systems which receive messages from the senders and forward the messages in a electronic form, such as Email, SMS MMS or the like, to the recipients. Such systems are well-known in the art. If a messaging system is capable of processing and forwarding messages in different forms it is also referred to as unified messaging system. There also so-called voice mail systems which allow a calling party to leave a voice message in the mailbox of the recipient who is the called party, e.g. if the called party is not able to answer the call. By return, the called party may then access its voice mailbox in order to retrieve or listen to recorded messages.

A particular voice mail system is described in US 6,590,965 B1. This voice mail system offers the recipient of a voice message to listen to a verbal announcement of the name and the number of the sender (calling party) who has left the message. The name associated to the message may be retrieved from a database.

In a different voice mail system known from US 6,650,740 B1 the recipient who is subscriber of a voice mail service is able to directly reply via telephone to a recorded voice mail message that has been made available to the subscriber at a voice mail system.

US 6,651,042 B1 on the other hand describes a voice mail system, which is able to convert recorded voice mail messages from voice mail to Email. The associated Email may then be entered into an Email system in order to notify the subscriber of the recorded voice message.

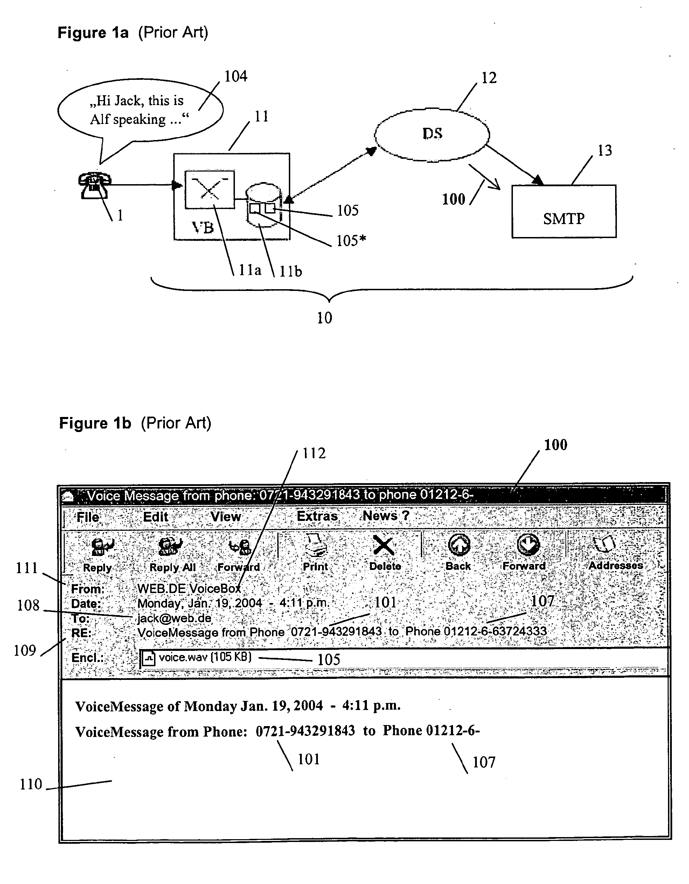

Fig. 1a & 1b show a further example of a known messaging system 10, wherein a voice message 104 is received from a sender's PSTN terminal 1 and is forwarded in Email form 100 to the recipient.

In particular, Fig. 1a shows a network architecture and elements of such a messaging system 10. The system comprises a switch, namely a voice box 11, being connected to the public switched telephone network PSTN, and comprises means of a delivery service 12 being connected to an IP network and elements therein, in particular to a SMTP server 13. The voice box 11 is an IVR (interactive voice response) element which receives messages from PSTN subscriber terminals, in this example it receives a voice message 104 from the PSTN telephone 1 of the sender named "Alf". The voice message is determined to reach the recipient, who is e.g. named "Jack". The voice message is a spoken message from Alf to inform his partner Jack, the message 104 may start with "Hi Jack, this is Alf speaking...". As Jack cannot be reached on his phone the voice message 104 from Alf is received by the messaging system 10 and is forwarded in form of a voice mail 100 to Jack.

Therefore the voice message 104 is first received by the voice box 11 and recorded there to be stored as an audio file 105 on a storage means, such as a harddisk 11b of a file server. Beside the audio file 105 containing the pure audio data (e.g. in WAV or MP3 format) there is also stored a meta data file 105* which contains a set of call data such as calling party number and called party number. Additionally some information about the audio file 11b is also stored, in particular the type of the file (here WAV) and the volume of the file (e.g. 105 kB). These data from file 105* are also processed by the messaging system 10 when putting the message into a form, e.g. Email, which finally is forwarded to the recipient. The data from file 105* comprises at least one identification data of the sender, in this example the calling party number also referred to as incoming call ID. This identification data is in particular the telephone number of the sender's telephone 1 which is in this example Alf's phone number "0721-943291843" as can be seen by reference 101 in Fig.1b.

From the voice box 11 the message 104 as such and corresponding data, in particular the audio file 105 and the corresponding meta data file 105*, are then taken by the delivery service 12 to be further processed there. The delivery service 12 is an application running on a platform which composes and forwards the voice message in an electronic form, namely in form of Email 100, to the recipient who is Jack having the Email address "jack@web.de". Thus the Email 100 is a transport container for said voice message 104. The forwarding of that Email 100 is performed via the a SMTP (Simple Mail Transfer Protocol) to the server 13 which administers the mailbox of the recipient. There the Email 100 is stored to be retrieved by the recipient who is Jack in this example.

It is well-known to have Emails of the type as shown in Fig. 1b. Such an Email 100 is usually having a header 109 and a body 110. The header 109 is having different data fields, such as the field "To" which indicates the recipient's Email address 108 ("jack@web.de"). Further there is a reference field "RE" which indicates the item of the Email, in this case it indicates that this Email 100 is referred to a "VoiceMessage from Phone 0721-942391843 to Phone 01212-6-63724333". The first number is the telephone number 101 of the sender. The second number is the telephone number 107 of the recipient's voice mailbox which is administered by the messaging system 10. In other words the second number is the phone number to reach via the voice box 11 the messaging system and the corresponding mailbox of Jack having the address "jack@web.de". The header 111 of the Email 100 is further having a "From" line 111 indicating the originator of the messaging service which is in this case named "WEB.DE VoiceBox". The voice message 104 as such is recorded in a WAV file 105 which is attached to the Email 100 as can be seen from Fig. 1b. When opening the Email 100 the recipient can listen to the voice message by using any appropriate application, such as WinAmp or the like, to play that WAV file 105.

As can be seen from Fig. 1b the Email 100 recipient is provided with the telephone number 101 of the sender (caller) of the voice message 104. Thus, the recipient of the voice message may reply to the Email 100 by calling back the sender (caller) with the help of the displayed telephone number 101. This way of replying is however cumbersome for the recipient.

Indeed, the recipient of the Email 100 must revert to a different communication medium in order to reply to the message. In particular, he must pick up his telephone, dial the phone number 101 mentioned in the mail and only then will be able to engage in a communication with the sender.

Moreover the voice mail 100 contains in its header, nameley in the so-called "From"-line 111, just an indication of the originating messaging service.

Therefore the described state of the art does not allow a recipient of a mail containing a voice message to directly and easily reply to the sender of that voice message. In particular, the recipient of such an Email cannot directly send an Email reply to the voice message sender.

### Object of the invention

It is therefore the object of the present invention to allow a recipient of a message, in particular of a voice message, to directly and easily reply to that message.

Before starting with the description of the invention some terms and definitions shall first be presented here:
"Message" shall mean any type of information which can be transmitted from any sender to at least one recipient. A message may be represented in writing, speaking or in sending data of any type, such as text, voice or any other audio, image or video, alphanumerical or multimedial data and the like.

In this context the message is the information as such whereas the form of a message is the container to transport the message to the recipient. Preferably an "electronic form" is used which shall mean any type of container or format to transport the message by electronic transmission, in particular via communications networks, such as Internet, LAN, PSTN, GSM, UMTS etc.. Thus "electronic form" may be e.g. Email, SMS, MMS, fax or any other communications format.
The meaning of "form" shall not be understood to narrow in the sense that a message is fully contained, integrated or embedded into that form. The form may allow a message to be linked or attached to a notification which is transmitted to the recipient. In this context a particular form may be a Email to notify the recipient of the receipt of a voice message, the voice message as such being attached to that Email as an audio file. Or the Email may contain a hyperlink to retrieve the voice message, in particular the audio file, form a storage means, such as from a local harddisk or via the web from a remote file server.

In general "Email" means an electronic mail by which the message is transmitted to the recipient. The Email may contain the message data as such (e.g. a text or image) in a format, such as TEXT, HTML, TIFF etc.. As mentioned above the Email also may have attached the message in form of a data file (e.g. WAV, MP3, TIFF, BMP). Another example could be that the Email comprises a hyperlink to an URL at which said message data can be retrieved from the web.

"Voice mail" as such is commonly used for a service for digitally recording a voice message from a calling party and storing the recorded data in form of an audio file to be provided in a voice box or the like for a called party who can later retrieve these audio file and play it back to listen to that voice message.

"SMS" means a form to transmit text messages in 160 digit long data blocks via the so-called Short Message Service in wireless communications networks (GSM, UMTS). The sending of SMS needs not to start from a mobile terminal, but can also be initiated from clients of IP services, in particular Email services having SMS capabilities.

"MMS" means a form to transmit a so-called Multimedia Message. MMS is an enlarged form for transmitting multimedia data, esp. voice and/or image and/or video and/or text or the like.

In context of the above definitions, a sender may be any person, party or system, which is the author of a message that is sent to a third party, namely to the recipient.

### Short description of the invention

The above mentioned object is achieved by a method for enabling a direct reply to a sender's message received by the messaging system and forwarded by a messaging system in an electronic form being used as transport container for the message, the method comprising the steps of:
- using identification data of the sender;
- accessing a database and matching the identification data to an address of the message sender;
- retrieving said address; and
- forwarding said message in said form to the recipient to enable him or her to send back a reply message to the sender by using said retrieved address.

By performing this method the recipient can make use of this retrieved address to send back a reply message to the sender. The method provides a comfort messaging wherein the identification data of the sender, which may be e.g. the telephone number of a voice message sender, is mapped to an appropriate address of the sender, which may be e.g. his or her Email address. The address may be retrieved from any database. In particular a database may be used such as the database which is described in the website-based communications environment of WO 03/094469A2, a patent application filed by the applicant.

A preferred embodiment is that the sender's address is retrieved and forwarded by the message system to the recipient. As in this embodiment the process is basically performed by a server of the messaging system this embodiment shall be called "server-based solution". If the message is sent in form of an Email the recipients can instantly react by a reply Email. Therefore he/she may use any standard Email application such as FreeMail™ which is provided by the applicant, or Microsoft Outlook® or Eudora® or the like. There is no need for the recipient to install any program or plug-in. The "server-based solution" works at once.

Alternatively the messaging system may just forward to the recipient the message together with said identification data and the sender's address is then retrieved by means, such as a client, which is used by the recipient and/or which are installed at the client. This embodiment is therefore called "client-based solution".

Both solutions are having the same principle, namely to provide the recipient with an address of the sender to which an instant reply message can be send back. This principle as well as the preferred solutions and further modifications and combinations of the features of the invention will later be described in more detail in reference to the enclosed figures.

In a further embodiment, the inventive method may further comprise the step of sending an automatic reply to the message sender using said address. In this case, the reply is not initiated by the recipient of the message but is automatically generated by an associated messaging system directly after the receipt of the message. This automatic reply could e.g. inform the message sender that the message was received by the system. In such a way, the sender of the message is able to check whether his message has reached the intended recipient. Thus the automatic reply can be understood to be a receipt confirmation. This confirmation may also contain further data such as the date and local time of receipt.

In still a further embodiment of the invention a different address is matched to the identification data depending on the nature of the identification data. For example, if the identification data is recognized as an office telephone number, then the address that is matched to this number may be the associated office Email address. If, on the other hand, the identification data is recognized as a private home telephone number, then the address that is matched to this number may be the associated private Email address. In this way, with the help of the inventive method, the recipient of said message automatically gets the right contact address that is appropriate in order to reply to the message.

The features and advantages of the invention and the structures and functions of preferred embodiments will become even more apparent from the following parts of the description.

### Short description of the figures

The following description of the invention and of its preferred embodiments is referred to in the accompanying drawings, wherein:
- Fig. 1a & 1b: show a messaging system building and forwarding a conventional Email with an attached voice message to the recipient.
- Fig. 2a & 2b: show a messaging system building a new Email by accessing a database and retrieving the Email address of the sender according to a first embodiment of the invention (server-based solution).
- Fig. 3a & 3b: show a messaging system forwarding a conventional Email as in Fig. 1a&b, but a client is providing the recipient with the Email address of the sender by accessing a contact database according to a second embodiment of the invention (client-based solution).

### Description of the preferred embodiments

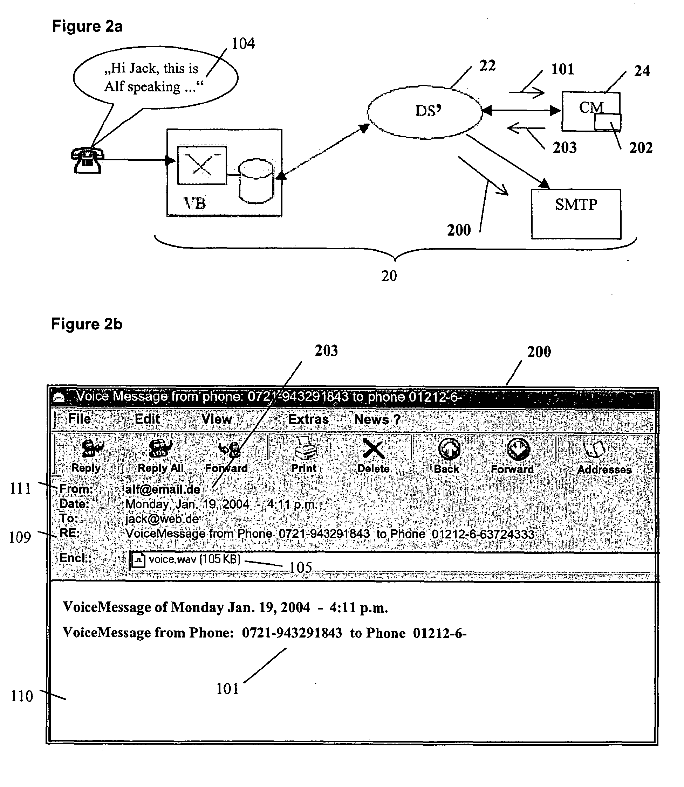

Fig. 2a shows an architecture of a messaging system according to a first embodiment which is also referred to as "server-based embodiment"

The messaging system of Fig. 2a has some elements which are identical to those from Fig. 1, namely a voice box VB for receiving calls from the PSTN and an Email server SMTP for receiving Emails from a delivery service. In Fig.2a the delivery service (DS') 22 is modified in having access to a database 202 and being capable of retrieving address data for composing Emails with attached audio files containing voice messages , the Email now being composed according to the invention by retrieving the sender's Email address from the database and inserting it into the delivered Email. The database 202 belongs to a contact manager (CM) 24 managing contact information, in particular phone numbers and corresponding Email addresses of the users of the system or at least managing the data of contact partners of the recipient. By accessing the database 202 the delivery service 22 provides the Email server (SMTP server) with an Email 200 as shown in Fig. 2b. This new Email is advantageous and user-friendly constructed as it will now be described in more detail with reference to both Fig. 2a & 2b:

In this example the voice message 105 is attached to the Email 200 in form of an audio file "voice.wav". In contrast to a conventional Email (see Fig. 1b the "From"-line of this comfort comfort mail 200 now contains the sender's Email address 203 which has been inserted by the messaging system 20. Thus the recipient can instantly react to the incoming Email 200 by sending a reply Email to the sender's address which is in this example "alf@email.de".

To compose or build such an Email 200 the system, in particular the delivery service (DS' in Fig. 2a), performs the following steps: First the sender's identification data 101 (e.g. the calling phone number "0721-943291843") is taken from the meta data file 105* which is stored in the voice box 11 (also see Fig. 1a). The identification data may also be taken from of any other storage means and appropriate data file or data set that is available. Then a database 202 is accessed to retrieve a corresponding Email address 203 (here "alf@email.de") which is then inserted into the "From" line 111 of the Email 200. Thus the recipient will receive from the messaging system 20 an Email 200 with an attached file 105 containing the voice message 104 wherein the Email 200 is having already integrated that Email address 203 of the sender. Therefore the recipient can easily reply by instantly sending back an Email to this address 203 which is in this case "alf@email.de".

This so-called "server-based solution" provides the client (which is here the recipient's PC) with a comfort Email 200 already having inserted the retrieved sender's address 203 (alf@email.de) in its "From"-line 111. The recipient (Jack) who receives this comfort Email 200 can very easily reply to it by just clicking on the Reply button. This means that any Email application or program without any need for modification at the client can be used.

Thus the recipient of the message may directly and easily reply to the message with one simple step. In particular, he or she may easily answer by a reply Email. Accordingly, communication between parties is encouraged and facilitated.

Of course the recipient may be provided with other or further reply address data. The messaging system 20 may e.g. retrieve from the database 202 also the sender's number in order to enable the recipient to instantly reply by SMS or MMS. The SMS or MMS reply messages may be sent to the sender instead of or in parallel to the reply Email. Another example would be to retrieve from the database the sender's fax number in order to reply by fax. A lot of other embodiments, falling under the scope of the invention, may be realized.

The used database may have any collection of data containing identification data and addresses of various parties. Preferably, the database contains the contact details and addresses of various persons or parties. Such a database could, for example, be a private or public telephone directory or a private or public Email register or any other form of register. In particular, the database may be the personal and private address contact database of the recipient of said message, e.g. an address book or a contact management database. This database may be stored on a server or any other storage means to which the messaging system has access to. Preferably the database may be integrated into a communications service such as an unified messaging service and/or a website-based communications service.

The address to which the identification data is matched according to the present invention may be any contact address. Preferably, it may be an Email address. However, and in particular in the case where the sender's identification data is a PSTN non-mobile phone number, the address may also be a mobile phone number for directly replying to the received message by an SMS, MMS or the like. In any case, the address belongs to the message sender and allows to contact him or her in a way that is different from the way in which the message sender may be contacted using said identification data.

As shown in Fig. 2b the voice message is received by an Email 200 and the reply shall also be an Email which is sent back to the retrieved Email address 203 "alf@aemail.de". This retrieved Email address203 is e.g. inserted into the "From"- line of the header. It may also be linked to the "Reply" button and/or being inserted as a "mailto" element into the body of the Email. The unified messaging system may not only enable the recipient to reply by Email, but also by SMS or MMS etc.. The system may enable the recipient to reply with any combination of different types of reply message forms.

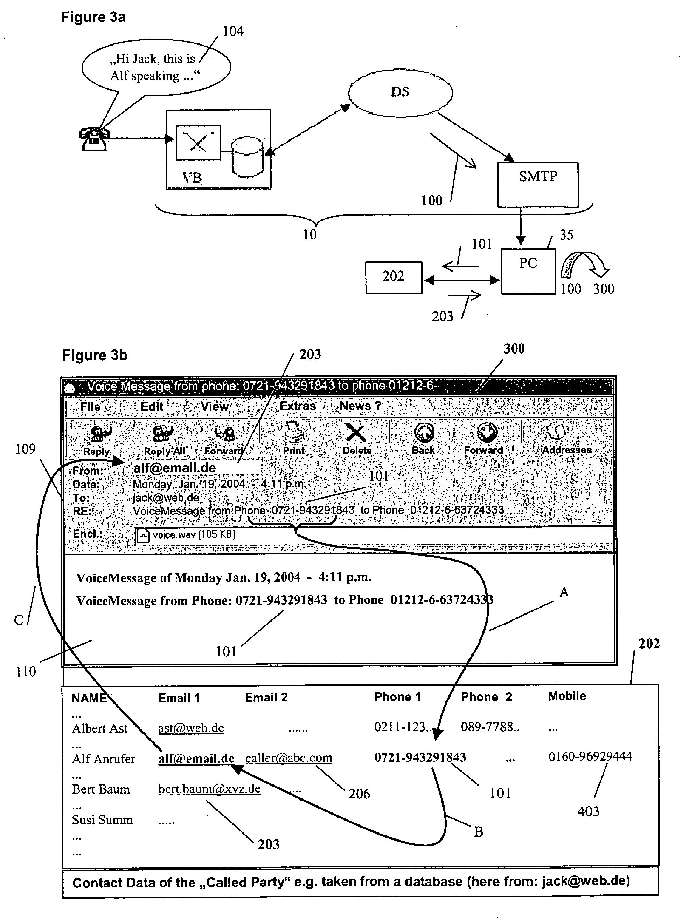

Now with respect to Fig. 3a and 3b another preferred embodiment will be described in more detail, namely the so-called "client-based solution".

Fig. 3a shows the structure of a messaging system 10 which is basically the same than that of Fig. 1a. The messaging system is also having a voice box VB, a delivery service DS and a Email server SMTP.As all these elements are similar to those known from the prior art (see Fig. 1a) the system 10 will deliver an Email in the well-known form with the conventional indication in the "From" line, i.e. having the name of the voice box service (see Fig. 1b).

As shown in Fig. 3a there is a client 35 used by the recipient, namely his/her PC which receives that conventional Email with attached voice message and which transforms it into a comfort Email 300 as shown in Fig. 3b.

Fig. 3b shows that Email 300 having a voice message attachment in the form of an audio file 105, in particular a WAV or MP3 file. The recipient of this Email may listen to the attached voice message by opening the attachment on his computer (PC). As can be seen from the header, the message was sent to Email address 108 "jack@web.de" which is the recipients Email address.

Title and reference 109 ("RE") of the Email 300 as well as the body 110 display the sender's telephone number 101 "0160-96929444" from which the voice mail message 105 originates. Accordingly, as known from the state of the art, the recipient of the Email is able to contact the sender of the voice message by using the displayed telephone number 101. However, thanks to the present invention, the recipient may also do so by using the displayed sender's Email address 203 "alf@email.de".

In the embodiment of Fig. 3b the Email 300 has been transformed by the client which has first received a conventional Email with attached voice message such as shown in Fig. 1b and which has then taken the identification of the originating service ("WEB.DE VoiceBox) to be replaced by a convenient Email address 203 for a reply to the sender.

Therefore the system delivers the Email 300 together with the sender's identification data, namely his telephone number "0721-943291843" and then the client reads the sender's identification data 101 from the received Email and requests at a database 202 (see arrow A in Fig. 3b) for a corresponding Email address 203 which is in this example the private Email address "alf@email.de" of the sender Alf (see arrow B in Fig. 3b).

The database 202 be installed on a local harddisk, it may also be a remote database to be accessed via the Internet or the like. In this example the database 202 is integrated into a communications application to manage contact details, namely the personal contact database of the message recipient.

Once the client (see 35 in Fig. 3a) has found the telephone number 101 within the database 202 (arrow A), it matches this telephone number 101 to an associated address 203 such as an Email address as shown by arrow B. The client may match a different address 206, e.g. "caller@abc.com", to telephone number 101, depending on the nature of the telephone number. For example, if the telephone number 101 is an office number, then the associated office Email 206 will be selected. On the other hand, if the telephone number is a private telephone number, the private Email address 203 will be selected . The client program may, of course, also match other addresses or data to telephone number 101.

In a further step (arrow C) the matched Email address 203 is inserted in the "From"-line of the Email 203. If the client also matches and retrieves other data from database 202 , e.g. name of the sender and/or postal address, then this data may also be inserted into the Email 300.

With respect to all embodiments the inventive method and system enables the recipient to directly reply to a message sender. The recipient does not need to manually retrieve by himself the sender's address.

Rather, a server of the messaging system or the client automatically retrieves the associated address from a database and gives the recipient the opportunity to reply by Email, SMS, MMS or the like with a simple click of a mouse button.

Accordingly, the present invention eases and quickens communication. The invention enhances the integration of telephone and Email communication and therefore considerably advances unified messaging capabilities. A message, which was originally recorded and transported by telephone can be accessed by Email and in particular can be directly replied to by Email instead of reverting to the original telephone system.

### list of reference numerals

- **1**: PSTN terminal
- **10**: messaging system (prior art)
- **11**: voice box (VB)
- **11a**: switch
- **11b**: hard disk
- **12**: delivery service (DS)
- **13**: email server (SMTP server)
- **20**: messaging system of first embodiment
- **22**: delivery service (DS') of first embodiment
- **24**: contact manager (CM) of first embodiment
- **35**: client (PC) of second embodiment
- **100**: email of prior art voice box service
- **101**: identification data of sender
- **104**: message (voice message)
- **105**: audio file
- **105***: meta data file
- **107**: telephone number of recipient
- **108**: email address of recipient
- **109**: title of email
- **110**: body of email
- **111**: "from"-line of email (indication of originator)
- **112**: name of the delivery service
- **200**: email of first embodiment
- **202**: database (contact database)
- **203**: address of sender (retrieved from database)
- **206**: alternative (second) address of sender
- **300**: email of second embodiment
- **A, B, C**: steps of method (second embodiment)

## Claims

1. A method for enabling a direct reply to a sender's message (104) received by a messaging system (20) and forwarded by the messaging system (20) in an electronic form (200) being used as transport container for the message (104), the method comprising the steps of:
- using identification data (101) of the sender;
- accessing a database (202) and matching the identification data (101) to an address (203) of the message sender;
- retrieving said address (203);
- forwarding the message (104) in said form (200) to the recipient to enable him or her to send back a reply message to the sender by using said retrieved address (203).

2. A method according to claim 1, wherein said message is a voice message (104), a fax message, an alphanumerical or multimedial data message.

3. A method according to claim 1 or 2, wherein said electronic form is an Email, in particular an Email (200) referring to a voice message (104), a SMS or a MMS.

4. A method according to claim 1 to 3, wherein said identification data of the sender is a telephone number (101) or a fax number of the sender.

5. A method according to claim 1 to 4, wherein said retrieved address is an Email address (203), a fax number, a SMS or MMS number to be used for sending back the reply message.

6. A method according to one of the preceding claims, wherein said electronic form (200) contains the retrieved address (203).

7. A method according to one of the preceding claims wherein said electronic form is an Email(200) and the retrieved address is a sender's Email adress (203) which is inserted into said Email (200) in particular into the "From"-line (111) of said Email (200).

8. A method according to one of the preceding claims, wherein said electronic form contains an element, in particular a button or a hyperlink, to initiate the sending of the reply message to the retrieved address of the sender.

9. A method according to one of the preceding claims, wherein said messaging system (20) forwards to the recipient the message in said electronic form (200) which is containing said retrieved address (203) and also containing the identification data (101) of the sender to give more information to the recipient.

10. A method according to one of the preceding claims, wherein the messaging system is sending an automatic reply message to the message sender using the retrieved address (203) of the sender.

11. A method according to one of the preceding claims, wherein a different address (206) is matched to the identification data (101) depending on the nature of the identification data (101).

12. A method according to one of the preceding claims, wherein said database (202) is a contact database and/or address database, in particular a database (202) of said messaging system (20).

13. A method for enabling a direct reply to a sender's message (104) received by a messaging system (10) and forwarded by the messaging system (10) in an electronic form being used as transport container for the message (104), the method comprising the steps of:
- at the client using identification data (101) of the sender;
- accessing a database (303) and matching the identification data (101) to an address (203) of the message sender;
- retrieving said address (203);
- providing the message (104) by putting said address (203) into said form (300) to the recipient to enable him or her to send back a reply message to the sender by using said retrieved address (203).

14. A method according to claim 13, wherein the messaging system is forwarding to the client (35) the message (104) together with said identification data (101) of the sender.

15. A method according to claim 13 or 14, wherein said database is the personal or private database (202) of the recipient of said message (104).

16. A messaging system (20) for enabling a direct reply to a sender's message (104), the messaging system (20) being programmed so as to execute the steps of the method as claimed in method claim 1 and its depending claims.

17. A client (35) for enabling a direct reply to a sender's message (104) received and forwarded by a messaging system (10), the client (35) being programmed so as to execute the steps of the method as claimed in method claim 13 and its depending claim.
